# EUROPEAN PATENT APPLICATION

(11) **EP 0 670 662 A1**
(43) Date of publication of application: **06.09.1995**
(21) Application number: 94830093.4
(22) Date of filing: 28.02.1994
(51) Int. Cl.: H04N 7/18

(54) **A video system for detecting movement by a video-camera**

(71) Applicant: FINMECCANICA S.p.A. AZIENDA ANSALDO, I-16128 Genova (IT)
(72) Inventor: Parenti, Riccardo, I-16132 Genova (IT); Bagnasco, Alberto, I-16151 Sampierdarena, Genova (IT); Federici, Carlo, I-16154 Sestri Ponente, Genova (IT); Bosia, Giorgio, I-16144 Genova (IT)
(74) Representative: Maggioni, Claudio

(57) **Abstract**

The system detects the movement of an object in the scene by means of a television camera (TC) which acquires successive images of the scene.

In order to achieve a high speed of intervention with a relatively simple structure, the system provides means (A/D) for processing the video signals generated by the camera into numerical data which define the images acquired point by point, means (UM) for memorising data relating to at least one image, means (UE) for comparing data relating to corresponding points of a memorised image and of an image being acquired and for generating a difference signal if the compared data are different, and signalling means (AL, CNT) which respond to these difference signals by producing a signal indicating movement or a variation in the dynamic state.

## Description

The present invention relates to video-surveillance systems, that is to systems for detecting the movement of an object or a variation in the dynamic state of an object in a scene, and, in particular, to an automatic video-surveillance system which uses a television camera, memories and image-comparing means to detect and signal significant differences between two images of a scene taken in succession.

Video-surveillance systems are widely used for the visual monitoring of environments where security reasons demand the rapid detection of the presence of intruders or, more generally, the presence of moving objects.

Video-surveillance systems are also used to detect variations in the dynamic state of objects. For example, in a case where movement is a normal state, such as in a plant with machinery in operation, a video-surveillance system may be used to detect the accidental stopping of a machine.

In addition to well known systems in which surveillance is the responsibility of an operator who monitors the scene directly on a screen, systems are known, though not yet widely in use, which enable the detection and reporting of significant alterations in the scene of the environment under surveillance to be entirely automatic. These systems appear to be superior to those requiring an operator, especially in cases where a single operator has to monitor several environments. In general, an automatic video-surveillance system takes images of a scene with a common video-camera, converting and electronically processing images and continuously comparing images taken at different instants and emitting an alarm signal if this comparison shows that the images are different.

Prior art automatic systems are relatively slow as they require memorisation of two or more images and a complicated processing of the memorised images. They are also expensive as the image processing requires somewhat complex hardware and software.

The object of the present invention is to provide a detection system of the type described above which is able quickly to identify movement or, in general, variations in a scene, and is of simple construction and therefore also economical.

This object is achieved according to the invention by providing the system defined and characterised in general in the first of the Claims which follow this description.

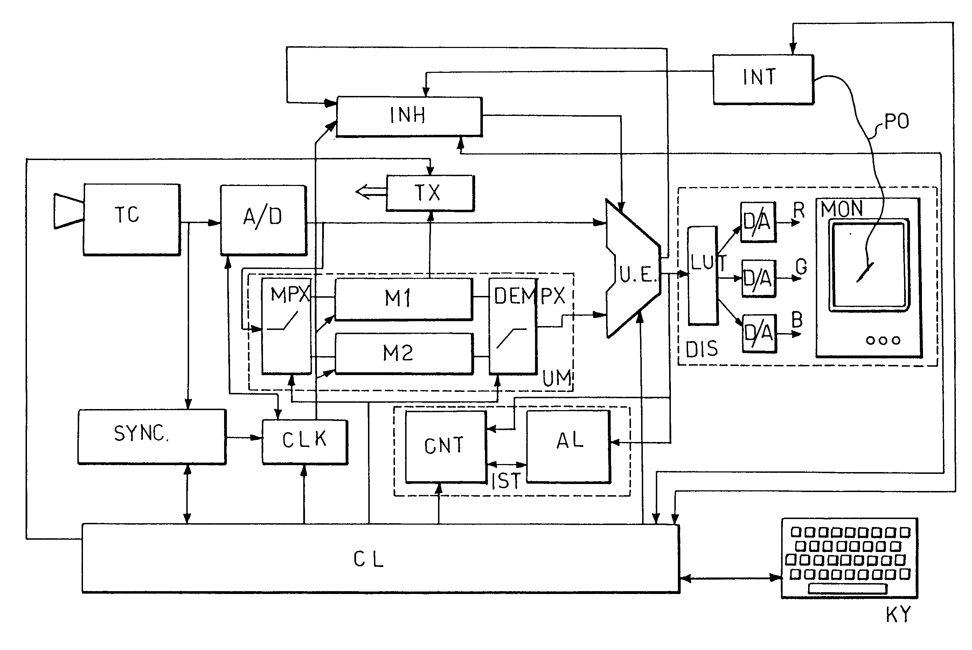

The invention will be better understood from the following detailed description of one embodiment, provided purely by way of non-limitative example in relation to the appended drawing, which represents an operational block diagram of the system according to the invention.

A television camera TC, which may be a normal, commercial monochromatic television camera, takes images of a scene, for example an environment under surveillance, at a predetermined rate and produces an ordinary, composite output video signal. A synchronisation-detector circuit SYNC, connected to the output of the camera, extracts the synchronisation signal from the video signal and sends it to a clock circuit CLK and to a control logic circuit CL to regulate the timing of the entire system and synchronise it with the image acquisition.

The video signal is also applied to an analog-to-digital converter A/D which is timed by the clock circuit CLK and samples the signal and, for each image, derives a plurality of numerical values which each define a point of the image by means of a gradation of grey based on a predetermined grey scale. The image, thus coded into a sequence of numbers, is sent both to the input of a comparator unit UE and to a memorisation unit, generally indicated UM. The unit UM is constituted by two sequential access memories, indicated M1 and M2, each provided to memorize the numerical data which define the points of an image, a multiplexer MPX the input of which is connected to the output of the A/D convertor and the output of which is connected to the two memories M1 and M2, and a demultiplexer DEMPX with its input connected to the two memories and its output to a second input of the comparator unit UE. The multiplexer MPX and the demultiplexer DEMPX have a commutation input connected to the control logic circuit CL for selective activation of their output or input terminals respectively.

The multiplexer MPX routes the numerical sequence coming from the A/D convertor to one or other of the two memories M1 and M2 so as to store the data relating to one image in one of the memories and those relating to the subsequent image in the other memory. The demultiplexer DEMPX withdraws the data contained in the respective memory on one or the other of its inputs, whichever is activated in turn. The control logic circuits CL regulate the commutation of the multiplexer MPX and the demultiplexer DEMPX so as to swap the role of the two memories each time the data relating to an image of one imaging cycle are loaded into one or the other thereof and, simultaneously, the data contained in the already loaded memory are retrieved. In use, during normal operation, the data relating to corresponding points on two subsequent images, more specifically to the image that is being taken and the one that was stored immediately before in one of the two memories M1 and M2, thus appear at the first and second inputs of the comparator unit UE.

Movement detection is based on the fact that a moving object is identified by points that, in general, have a different brightness in different images. This applies essentially to the outline of the moving object if it is supposed, as is generally the case, that the moving object is brighter than the background. Different brightnesses are identified in the system by numerical data which correspond to different grey values.

The unit UE, the operation of which is regulated by the control logic circuits CL, compares the input data with each other: if they are the same, that is they identify the same grey values, it outputs the corresponding number unaltered; if they are different, it emits a difference signal, constituted by a number which identifies the difference in gradations of grey between the two input data, and relays it to an alarm actuator. This actuator could trigger an alarm immediately the unit UE emits a difference signal. However, in order to reduce the sensitivity of the system and thus improve its reliability, the embodiment represented in the drawing has a hysteresis or accumulator device, generally indicated IST, connected to the output of the comparator unit UE. This device IST is constituted by a threshold alarm activation circuit AL and by a counter CNT, both connected to the output of the unit UE. The counter CNT is also connected to the control logic circuit CL and to the alarm activation circuit AL.

If the difference signal exceeds a threshold value entered into the circuit AL, a count signal is sent to the counter. When the number in the counter exceeds a predetermined value, the circuit AL generates an alarm-activating signal to indicate that a movement has been recognised in the scene under surveillance. In practice, sirens or other electrical alarm devices may be activated, the brightness of the monitor screen provided for visual monitoring of the scene may be increased, the scene may be illuminated by extra lights and other precautions may be taken in order rapidly to identify the cause of the alarm.

In order to enable to scene to be monitored visually, a monitor screen may be provided, as referred to briefly above. In the embodiment illustrated, the difference signal at the output of the comparator unit UE is also fed to an image-processing and display device, generally indicated DIS. This device is constituted by a look-up table LUT and circuits for constructing a false-colour video image, represented by three digital-to-analog converters D/A and by a colour monitor MON. In the look-up table LUT, the brightness-variation data detected at one point of the scene and expressed by the difference signal associated with that point are modified so that the point is displayed by means of distinctive characteristics, different from the original ones: for example by assigning it the colour red. In this case, a moving object in the scene is clearly distinguished as it is outlined in red on the monitor MON. Other alterations to the image to be displayed may be obtained by entering into the table LUT suitable values to be associated with points with predetermined gradations of grey, in order, for example, to exaggerate contrast, assign fictional colours to predetermined parts of the image, etc.

The embodiment shown in the drawing also has a circuit block TX, connected to one of the image memories (M1) and to the control logic circuit block CL and arranged to transmit the data contained in the memory to a remote display and/or processing station. A keyboard KY is also connected to the control logic circuits CL to enable an operator to carry out certain operations on the system, to improve the display of the image or to control the alarm, which are not possible automatically.

One possible interaction between the operator and the system consists, for example, in excluding the highlighting function. This may be useful because an image which has been reprocessed in artificial colours does not give the clearest picture of the scene. During rapid movements, in particular, the red-highlighted outlines of moving objects tend to confuse smaller details, or when the monitored image changes as a result of action by a variable-focus lens in the camera, this variation in the image may be interpreted as the result of movements of the objects being viewed. In order to avoid false alarms and to give the operator a clear picture of the image on the screen, it is possible to generate a signal which temporarily inhibits the alarm device, by means of manual commands on the keyboard and special inhibition circuits in the control logic circuit block CL. This result may be achieved, for example, by acting on the comparator unit UE so as to block the emission of difference signals and thus monitor the image as scanned. The monitor may be the same one as is used to display the scene during automatic operation of the system, but it may also be a separate one.

The system according to the invention may also provide a further useful function which enables the precise selection of the area to be monitored, independently of the focus of the lens used. To this end, a third image memory is provided, which can be defined as an inhibitor memory and is indicated INH on the diagram, and which has an input terminal and an output terminal, respectively connected to an output terminal and an input terminal of the comparator unit UE. This latter is also connected for synchronisation to the clock circuit CLK and is controlled by appropriate comparator and inhibitor circuits included in the control logic circuit block CL and activated by manual commands on the keyboard KY.

With the means briefly described above, which are easily assembled by an electronics expert, it is possible to programme the system in real time to exclude the detection of movement in certain areas of the image. This inhibition function is obtained by memorising in the inhibitor memory INH a map of the points of the scene at which movement was detected during a predetermined period of time. This first phase, which may be defined as learning or acquisition, is carried out on starting up the system: an operator decides that movement is allowed along a certain path and presses a key on the keyboard for the time it takes for an object actually to move along that path. As a result of this operation, the difference signals generated by the comparator unit UE cause the corresponding points to be memorised in the inhibitor memory INH. In use, display of the contents of the memory INH shows a black image with a light track which corresponds to the path travelled by the moving object. This acquisition phase may be repeated at any time to alter permitted paths or to add new ones.

Thanks to this function it is possible, for example, to monitor a fork in a road and to activate the alarm only when a vehicle takes a different route from that permitted or, in an industrial environment, to monitor the surroundings of a working conveyor belt and intervene only in the event of movement by objects other than the belt.

During the monitoring or automatic operation phase of the system, the comparator unit UE is blocked at the points memorised by the inhibitor memory INH and emits a signal corresponding to a stationary object instead of the difference signal indicating movement. In this way, the alarm device AL cannot be activated. The "free zones" on the monitor screen MON, that is the permitted paths, may be displayed in a particular way, by associating their constituent points with appropriate codes in the look-up table LUT. They may, for example, be displayed in light colour or in a predetermined shade of grey and appear as moving images without the red outline.

In the case of rapid movements it is an advantage if, in order to avoid discontinuity in the path of the moving object, which would cause false alarms, the image memorised in the inhibitor memory INH is corrected by treating the points immediately adjacent the moving points also as moving points. This task is carried out by special circuits in the control logic.

The function described above for selecting permitted paths may not always prove entirely satisfactory. To carry out the acquisition phase, it is necessary in fact to wait for all the "free zones" to be crossed at least once. In addition, a record is kept during the acquisition phase of the movements along the paths of all the moving objects in the frame. This may lead to the exclusion of areas which are supposed to be monitored.

In these cases, according to an advantageous variant of the invention, the acquisition phase is carried out by means of a light pen, indicated PO in the diagram, which supplies data relating to areas of the image to be excluded, which are defined manually by the operator directly on the screen of the monitor MON, directly to the inhibitor memory INH by means of an appropriate interface INT. This device may naturally also be used in conjunction with the keyboard-controlled arrangement described above.

The advantages of the system according to the invention over prior art systems are apparent from the above description. In particular, it should be noted that the speed of response of the system is extremely high as it is not necessary, as in prior art systems, to memorise a whole image before starting to analyze it: the image is processed, in fact, while it is being acquired and the result of the processing, that is any alarm signal, is obtained as soon as the last point of the image is received. The speed of response of the system is therefore limited only by the scanning speed of the camera. With a camera taking 50 images per second, for example, the maximum intervention delay is of 0.02 seconds.

It should also be noted that the entire system, except of course for the camera, may be manufactured in extremely compact form in a single circuit card which may easily be housed inside the casing of the monitor. This characteristic is extremely important in the case of a system according to the invention replacing a conventional surveillance system as it takes up no more room.

While only one embodiment has been described and illustrated, it is clear that numerous variants and alterations are possible without departing from the scope of the invention. Instead of two sequential access memories, for example, a single casual access memory could be used and, in applications where very slow movements need to be detected, the control logic and the timing circuits could be adjusted so as adequately to reduce the number of images acquired in the unit time.

Finally, it is clear that the system has been described without going into manufacturing details but confining the description to the definition of operating characteristics. The functions have been sufficiently defined, however, to give an electronic systems expert sufficient information to be able to produce the circuits which carry out these functions.

## Claims

1. A system for the detection of movement of an object, or a variation in the dynamic state of an object in a scene, by means of a television camera (TC) provided for acquiring successive images of the scene and converting them into video signals, characterised in that it includes
video signal processing means (A/D) for deriving numerical data which define the acquired images point by point,
means (UM) for memorising data relating to at least one image,
means (UE) for comparing data relating to corresponding points of a memorised image and an image being acquired and for generating a difference signal if the compared data are different with each other and signalling means (AL, CNT) responsive to said difference signals for producing a signal indicating movement or a variation in the dynamic state.

2. A system according to Claim 1, characterised in that the numerical data which define the acquired images point by point each represent a gradation of grey on a predetermined grey scale.

3. A system according to Claim 1 or Claim 2, characterised in that
the processing means include a converter (A/D) which receives the video signals at its input and provides the data defining the image at its output,
the memorisation means (UM) include two sequential access memories (M1, M2) each provided to store the data relating to one image, a multiplexer (MPX) connected to the output of the converter (A/D) and to the memories (M1, M2) and arranged to route data to the memories so as to store two successive images therein, a demultiplexer (DEMPX) connected to the memories and arranged to output the data from one or the other of the two memories, and control means (CL) arranged selectively to connect one or the other of the two memories to the multiplexer and the demultiplexer and
the comparator means (UE) are connected to the output of the converter (A/D) and to the output of the demultiplexer (DEMPX) so as to receive data from both for comparison.

4. A system according to Claims 1, 2 or 3, characterised in that the signalling means (AL, CNT) include means (CNT) for counting the difference signals and means for producing the signal indicating movement only when the number of difference signals counted exceeds a predetermined threshold.

5. A system according to any one of the preceding Claims, characterised in that it includes means (LUT) for processing the acquired images according to the difference signals and means (D/A, MON) for displaying the images resulting from this processing.

6. A system according to Claim 5, characterised in that the means (LUT) for processing the images according to the difference signals include means for associating a predetermined colour with the points of an image that have triggered signals indicating movement.

7. A system according to any one of the preceding Claims, characterised in that it includes means (MON) for displaying the acquired images, means (CL) for temporarily inhibiting operation of the signalling means and manual command means (KY) for activating or de-activating these temporary inhibition means (CL).

8. A system according to Claim 7 as dependent on Claim 5, characterised in that the means for displaying the acquired images and the means (D/A, MON) for displaying the images resulting from processing include a common monitor (MON).

9. A system according to any one of the preceding Claims, characterised in that it includes:
- means (KY, PO, INT) for acquiring data relating to points of the image to be excluded from surveillance,
- an inhibitor memory (INH) provided to memorise the data output by the acquisition means,
- comparator and inhibitor means (CL) operatively connected to the comparator means (UE) and to the inhibitor memory (INH) and arranged to prevent the generation of difference signals relating to points of the image memorised in the inhibitor memory (INH).

10. A system according to Claim 9, characterised in that the means for acquisition of data for the inhibitor memory (INH) include manual command means (KY) operatively connected to the comparator means (UE) for receiving from the latter difference signals over a predetermined period of time so as to obtain at least part of the data relating to points to be excluded.

11. A system according to Claim 10, characterised in that the data relating to points to be excluded include data relating to predetermined groups of points adjacent those which have triggered difference signals within the predetermined time period.

12. A system according to Claim 9, characterised in that the means for acquisition of data for the inhibitor memory include a light pen (PO) and an interface (INT) between the light pen and the inhibitor memory (INH).

13. A system according to any one of the preceding Claims, characterised in that it includes means (TX) for transmitting memorised data relating to an image to a remote station.
